Europäisches Patentamt

European Patent Office

Office européen des brevets

(11) Veröffentlichungsnummer: **0 334 978**
**A1**

(12) **EUROPÄISCHE PATENTANMELDUNG**

(21) Anmeldenummer: 88105043.9

(22) Anmeldetag: 29.03.88

(51) Int. Cl.⁴: **B65G 69/00**

(43) Veröffentlichungstag der Anmeldung:
04.10.89 Patentblatt 89/40

(84) Benannte Vertragsstaaten:
AT BE CH DE ES FR GB GR IT LI LU NL SE

(71) Anmelder: VAN WIJK NEDERLAND B.V.
Bouwweg 14
NL-8243 PJ Lelystad(NL)

(72) Erfinder: Pereira das Dores, Antonio
Archipel 36-09
NL-8224 HL Lelystad(NL)

(74) Vertreter: Beil, Hans Christoph, Dr. et al
Beil, Wolff und Beil Rechtsanwälte
Adelonstrasse 58
D-6230 Frankfurt am Main 80(DE)

(54) Verformbare Dichtung des Spaltes zwischen einer Gebäudeöffnung und einem an diese herangefahrenen Fahrzeug.

(57) Gegenstand der Erfindung ist eine verformbare Dichtung des Spaltes zwischen einer Gebäudeöffnung und einem Fahrzeug, die aus zwei Seitenteilen und einem Oberteil besteht. Jedes dieser Teile besteht aus aufblasbaren Wülsten aus einem luftdichten Material, die sich an das Fahrzeug anlegen. Das Oberteil läuft links und rechts in einer vertikalen Führungsschiene, die beiden Seitenteile hängen an Laufrollen in jeweils einer horizontalen Führungsschiene.

Der Bewegungsmechanismus für jedes der Teile besteht aus einer Seilwickelrolle mit Antriebsvorrichtung, einem über Umlenkrollen laufenden Zugseil, das an der Seilwickelrolle und am äusseren Ende der Seitenteile bzw. am unteren Teil des Oberteils befestigt ist und einer Vorrichtung zum Aufblasen und gegebenenfalls Leersaugen der Abdichtungsteile.

Elastische Zugelemente, die bei den Seitenteilen vor dem Verteilungspunkt des Zugseils in drei Seile angreifen und am Blendrahmen unten angebracht sind und beim Oberteil am Ende des Zugseils angebracht und über eine Umlenkrolle laufend oben an der Blende befestigt sind, sorgen für eine ständige Spannung der Zugseile und verhindern so das Ablaufen der Seile.

Xerox Copy Centre

## Verformbare Dichtung des Spaltes zwischen einer Gebäudeöffnung und einem an diese herangefahrenen Fahrzeug

Die Erfindung betrifft eine verformbare Dichtung des Spaltes zwischen einer Gebäudeöffnung und einem Fahrzeug, die aus zwei Seitenteilen und einem Oberteil besteht. Jedes dieser Teile besteht aus aufblasbaren Wulsten aus einem luftdichten Material, die sich an das Fahrzeug anlegen.

Eine derartige Dichtung ist aus der europäischen Patentschrift 69 093 bekannt.
Nachteil der in dieser Patentschrift beschriebenen Dichtung ist, dass die Rückführbewegung in Ruhestellung über Rückführmittel erfolgt, die dem Aufblasen nachgiebig entgegenwirken, um nach Abstellen der Luftzufuhr vom Gebläse die Luft aus den Abdichtelementen auszupressen und diese Abdichtelemente vom Fahrzeug zu entfernen.

Dies birgt folgenden grossen Nachteil in sich. Da diese Rückführelemente für das obere Kissen Gewichte und für die Seitenteile Spannelemente sind, hat dies zur Folge, dass diese Elemente auch beim Aufblasen der Kissen stets der Aufblasbewegung entgegenwirken. Da die Spannelemente für Seitenteile im allgemeinen aus Gummielementen bestehen, nimmt die Spannung beim Aufblasen stets zu.

Dies hat zur Folge, dass sich die Wülste im Bereich der Rückführelemente nicht mehr genau an das Fahrzeug anlegen und so Restspalten entstehen lassen. Ausserdem ist bei bekannter Ausführung auch der Ein- und Ausfahrbereich der Wülste begrenzt und die Einfahrzeit sehr lang.

Die Erfindung hat zum Ziel, diese Nachteile zu beheben. Da das Aufrollen der Kissen zentral über ein in zwei Richtungen wirkendes Antriebselement erfolgt, das unabhängig vom Gebläse die Wulste ein- und ausfährt, stehen die Rückführelemente beim Anlegen der Wulste an das Fahrzeug nicht unter Spannung, was eine optimale Abdichtung gewährleistet.

Durch die Führung des Oberkissens in Laufschienen ist ein V-förmiges Ausknicken beim Anlegen an das Fahrzeug nicht möglich. Dadurch, dass auch die Seitenkissen in einer Schiene hängen, ist auch eine optimale Abdichtung in den Eckpunkten gewährleistet, da sich die Kissen nicht mehr in Fahrzeugrichtung voneinander wegbewegen können.

Da jede Wulst mit drei Rückzugelementen ausgerüstet ist, ist auch die Bewegung vom LKW weg verbessert.

Da sich die Wülste im eingefahrenen Zustand hinter Schürzen befinden, ist die Gefahr der Beschädigung beim Anfahren gleich null. Ausserdem ist die optische Ansicht stark verbessert.

Die Auf- und Abwickelvorrichtung ermöglicht eine grössere Reichweite der Wulste ohne nachteilige Auswirkung auf die Qualität der Abdichtung. Die Fahrzeuge können in Abmessung mehr variieren. Da die Kissen durch das Gebläse wieder leergesaugt und zugleich durch den E-Motor hoch- bzw. eingezogen werden, wird dieser Vorgang stark beschleunigt. Der LKW kann schneller abfahren.

Anhand der Zeichnungen wird die Erfindung im folgenden näher beschrieben.

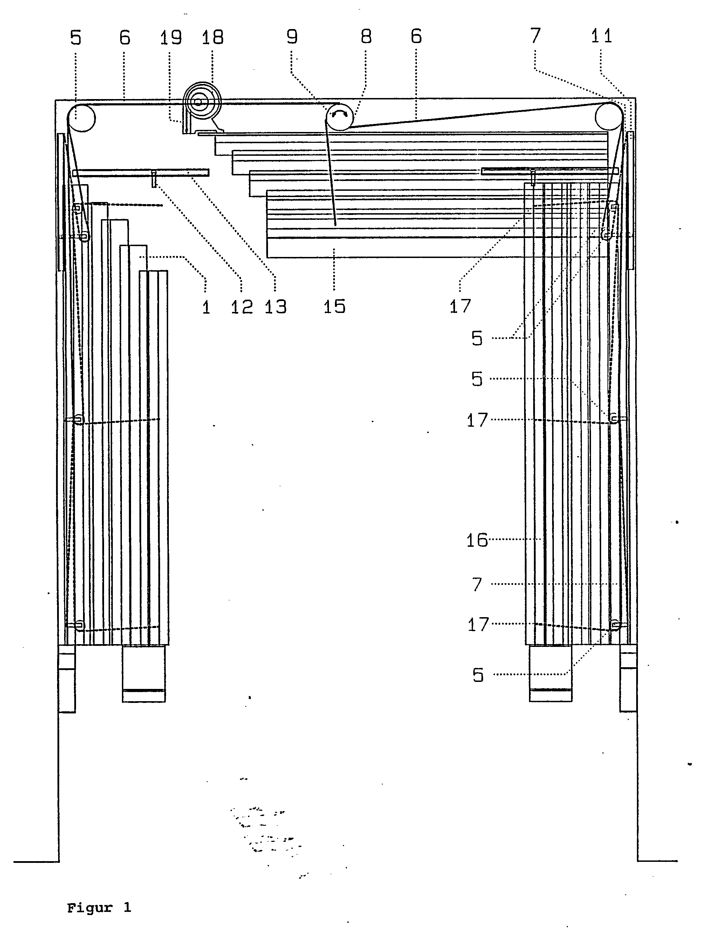

Figur 1: Gesamtansich (teilweise weggeschnitten)

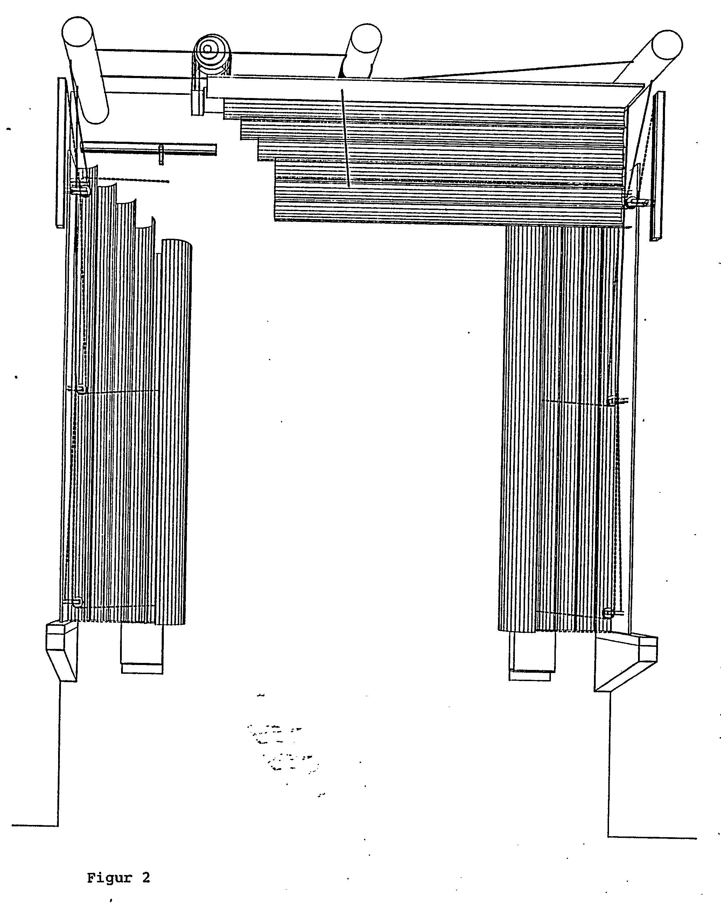

Figur 2: Perspektivische Darstellung der Fig.1

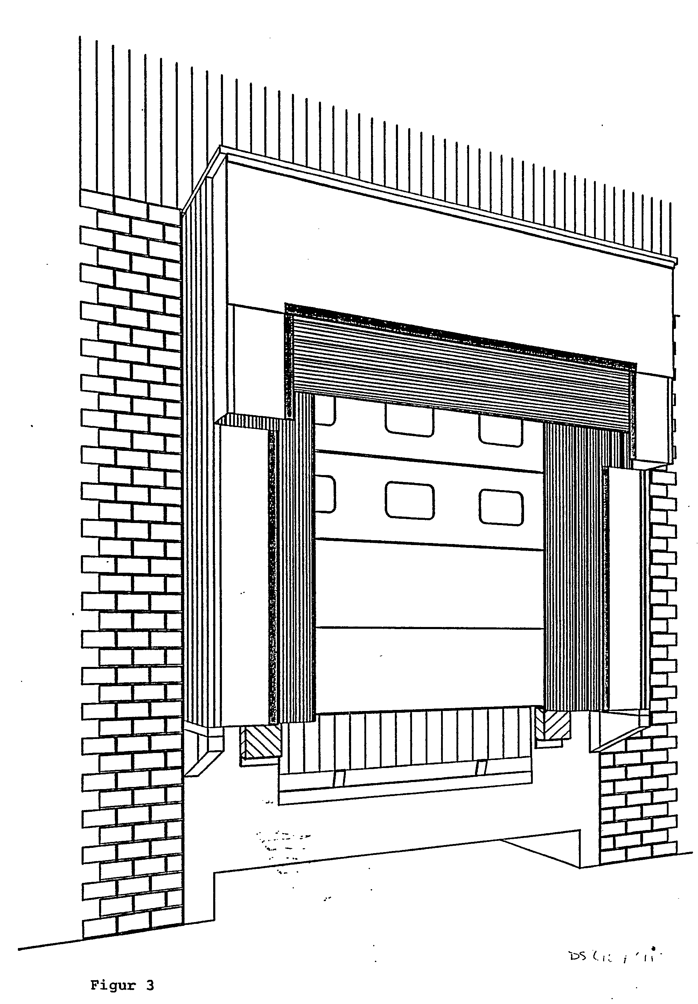

Figur 3: Gesamtansicht der an der Gebäudeöffnung montierten Vorrichtung

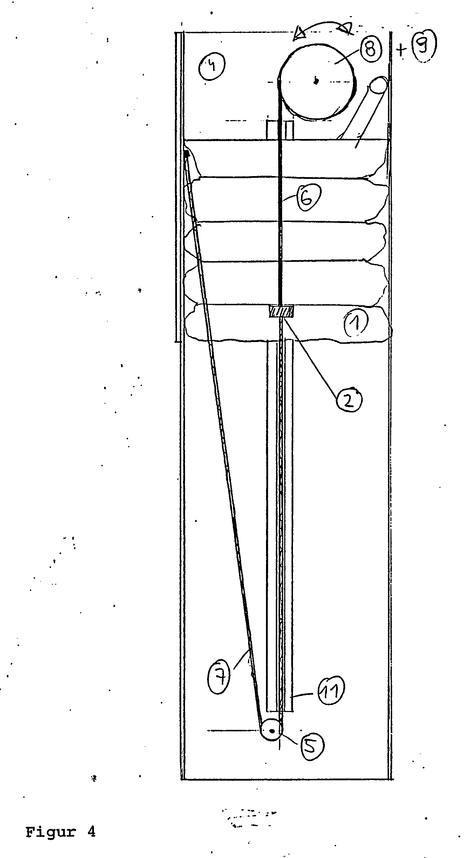

Figur 4: Seitenansicht des Oberteils in eingefahrener Position.

Die Vorrichtung besteht aus zwei Seitenteilen (16) und einem Oberteil (15), die aus aufblasbaren Wulsten (1) eines luftdichten Materials, beispielsweise aus PVC oder einem gummiähnlichen Material gebildet werden. Das Oberteil läuft links und rechts in einer vertikalen Führungsschiene (11), die beiden Seitenteile hängen an Laufrollen (12) in jeweils einer horizontalen Führungsschiene (13). Die Vorrichtung ist in einem überdachten Vorbau (4) untergebracht, der eine Schürze (14) besitzt.

Der Bewegungsmechanismus für jedes der Seiten- und Oberteile besteht aus einer Seilwickelrolle (8) mit Antriebsvorrichtung (9) und einem über Umlenkrollen (5) laufenden Zugseil (6), das an der Seilwickelrolle (8) und am äusseren Ende der Seitenteile (16) bzw. am unteren Teil des Oberteils (15) befestigt ist. Elastische Zugelemente (7), die bei den Seitenteilen vor dem Verteilungspunkt des Zugseils in 3 Seile angreifen und am Blendrahmen unten angebracht sind und beim Oberteil (15) am Ende des Zugseils angebracht und über eine Umlenkrolle laufend oben an der Blende befestigt sind, sorgen für eine ständige Spannung der Zugseile und verhindern so das Ablaufen der Seile.

Die Zugseile (6) der beiden Seitenteile (16) besitzen vorzugsweise Dehnelemente (17), die in Funktion treten, wenn die Seitenteile (16) eine andere Distanz als das Oberteil (15) ausschieben müssen. Die Dehnelemente (17) sind im ausgefahrenen Zustand nicht gedehnt und gleichen den Wegunterschied zwischen Oberteil und Seitenteilen beim Einfahren aus. An den beiden Zugseilen (6) für das Oberteil (15) sind Mitnahmeelemente (2) befestigt, die das Oberteil beim Einfahren mit nach oben ziehen.

Über ein Gebläse (18) wird die benötigte Luft den Wulsten (1) über Öffnungen (19) zugeführt, über die beim Einfahren die eingeschlossene Luft aus den Wülsten wieder entweichen kann, gegebenenfalls durch Absaugen mittels Gebläse (18).

Im Ruhezustand liegen die Seitenteile (16) an den Wänden des Vorbaus (4) hinter einer seitlichen Schürze an, während das Oberteil (15) hinter der Schürze (14) an vorzugsweise drei Zugseilen (6) hängt, die auf der Seilwickelrolle (8) aufgewickelt sind. Wenn ein Fahr zeug an die Gebäudeöffnung herangefahren ist, wird das Gebläse (18) betätigt und über die Öffnungen (19) Luft in die Wülste geblasen, das Oberteil (15) und die beiden Seitenteile (16) bewegen sich, durch den Antrieb (9) betätigt, auf das Fahrzeug zu, wobei die Zugseile (6) von der Seilwickelrolle (8) über die Umlenkrollen (5) abrollen und die Zugelemente (7) sich zusammenziehen. Über einen Endschalter wird dieser Abwickelvorgang immer im voll ausgefahrenen Zustand angehalten, so dass der Luftdruck keinen Widerstand der Dehnelemente (17) und Zugseile (6) zu überwinden braucht, da diese spannungsfrei sind. Dies gewährleistet eine optimale Abdichtung, da sich die Wulste genau an das Fahrzeug anlegen. Das Oberteil (15) und die beiden Seitenteile (16) werden dadurch immer an das Fahrzeug gedrückt und folgen einer sich verändernden Position des Fahrzeuges bei Be- und Entladung. Durch dieses System wird auch gesichert, dass beide Seitenteile fest am Fahrzeug anliegen, wenn dieses nicht genau in der Mitte der Gebäudeöffnung steht.

Vor dem Wegfahren des Fahrzeuges werden die Zugseile (6) wieder auf die Seilwickelrolle aufgewickelt, das Oberteil (15) und die beiden Seitenteile (16) zurückgefahren, wobei die eingeschlossene Luft vorzugsweise mittels Gebläse (18) aus den Wülsten (1) herausgesaugt wird und gleichzeitig die Zugelemente (7) gedehnt werden. Das Fahrzeug kann von der Gebäudeöffnung wegfahren, ohne dass die Abdichtung an dem Fahrzeug schleift und dies viel früher als bei bereits bekannten Systemen.

## Ansprüche

1. Verformbare Dichtung des Spaltes zwischen einer Gebäudeöffnung und einem an diese herangefahrenen Fahrzeug, bestehend aus

1. zwei Seitenteilen (16) jeweils bestehend aus
1.1 aufblasbaren Wülsten aus einem luftdichten Material,
1.2 einer oberhalb der Seitenteile horizontal angeordneten Führungsschiene (13)
1.3 einer in dieser Führungsschiene laufenden Rolle (12), an der
1.4 das äusserste Wulstelement des Seitenteils (16) aufgehängt ist
2. einem Oberteil (15), bestehend aus
2.1 aufblasbaren Wülsten aus einem luftdichten Material,
2.2 zwei an beiden Seiten des Oberteils (15) vertikal angeordneten Führungsschienen (11), und
2.3 in diesen Führungsschienen laufenden Führungen, die
2.4 am unteren Teil des Oberteils (15) befestigt sind,
3. einen Bewegungsmechanismus für jedes Teil, bestehend aus
3.1 einer Seilwickelrolle (8) mit Antriebsvorrichtung (9)
3.2 einem über Umlenkrollen (5) laufenden Zugseil (6), das an der Seilwickelrolle (8) und den Teilen (15,16) befestigt ist
3.3 einem an jedem Zugseil angeordneten elastischen Zugelement (7) und
3.4 einer Vorrichtung (18) zum Aufblasen der Seiten- und Oberteile (16, 15).

2. Dichtung nach Anspruch 1, dadurch gekennzeichnet, dass in den Zugseilen der Seitenteile (16) zusätzliche Dehnelemente (17) angeordnet sind.

3. Dichtung nach einem der Ansprüche 1 oder 2, dadurch gekennzeichnet, dass die an den Seilwickelrollen (8) befestigten Zugseile (6) gemeinsam von einer Antriebsvorrichtung (9) bewegt werden.

4. Dichtung nach einem der Ansprüche 1 bis 3, dadurch gekennzeichnet, dass die Antriebsvorrichtung (9) ein Elektromotor ist.

5. Dichtung nach einem der Ansprüche 1 bis 4, dadurch gekennzeichnet, dass die elastischen Zugelemente (7) Zugfedern sind.

6. Dichtung nach einem der Ansprüche 1 bis 4, dadurch gekennzeichnet, dass die elastischen Zugelemente (7) Gummiseile sind.

7. Dichtung nach einem der Ansprüche 1 bis 6, dadurch gekennzeichnet, dass die Dehnelemente (17) an den Zugseilen (6) der Seitenteile (16) Zugfedern sind.

8. Dichtung nach einem der Ansprüche 1 bis 6, dadurch gekennzeichnet, dass die Dehnelemente (17) an den Zugseilen (6) der Seitenteile (16) Gummiseile sind.

9. Dichtung nach einem der Ansprüche 1 bis 8, dadurch gekennzeichnet, dass die benötigte Druckluft durch ein Gebläse (18) erzeugt und den Wülsten (1) über die Öffnungen (19) zugeführt wird.

10. Dichtung nach einem der Ansprüche 1 bis 9, dadurch gekennzeichnet, dass beim Einfahren des Oberteils (15) und der beiden Seitenteile (16) mittels Antriebsvorrichtung (9) die eingeschlossene Luft über die Öffnungen (19) durch das Gebläse (18) abgesaugt wird.

11. Dichtung nach einem der Ansprüche 1 bis 10, dadurch gekennzeichnet, dass für jedes Seiten- und Oberteil drei Zugseile (6) vorhanden sind.

12. Dichtung nach einem der Ansprüche 1 bis 10, dadurch gekennzeichnet, dass die Abdichtungsvorrichtung in einem überdachten Vorbau (4) mit einer Schürze (14) und seitlichen Blenden, die die Vorrichtung im eingefahrenen Zustand nach vorne und aussen abschirmen, installiert ist.

Figur 1

Figur 2

Figur 3

Figur 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | EP-A-0 069 093 (TRELLEBORG) <br> * Insgesamt * <br> --- | 1,2,6,8 ,9 | B 65 G 69/00 |
| A | CH-A- 555 969 (FRECH) <br> * Insgesamt * <br> --- | 1,3,4, 12 | |
| A | US-A-3 665 997 (SMITH) <br> * Figuren 1-6; Spalte 2, Zeile 34 - Spalte 6, Zeile 59 * <br> ----- | 1,5,7, 12 | |

RECHERCHIERTE SACHGEBIETE (Int. Cl.4)

B 65 G

Der vorliegende Recherchenbericht wurde für alle Patentansprüche erstellt

| Recherchenort | Abschlußdatum der Recherche | Prüfer |
|---|---|---|
| DEN HAAG | 14-11-1988 | WERNER D.M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
......................................................................................
& : Mitglied der gleichen Patentfamilie, übereinstimmendes
    Dokument

EPO FORM 1503 03.82 (P0403)